# EUROPEAN PATENT APPLICATION

(11) **EP 4 450 833 A1**
(43) Date of publication of application: **23.10.2024**
(21) Application number: 22906994.3
(22) Date of filing: 14.10.2022
(51) Int. Cl.: F15B 15/10, F16L 33/24

(54) **HYDRAULIC ACTUATOR**

(30) Priority: 13.12.2021 JP 2021201735
(71) Applicant: BRIDGESTONE CORPORATION, Chuo-ku Tokyo 104-8340 (JP)
(72) Inventor: OONO, Shingo, Chuo-ku, Tokyo (JP); KURIYA, Yoshinori, Chuo-ku, Tokyo (JP)
(74) Representative: Marks & Clerk LLP
(86) International application number: PCT/JP2022/038447
(87) International publication number: WO 2023/112459

(57) **Abstract**

The fluid pressure actuator comprises an actuator body portion 100 and a sealing mechanism 200 that seals the end of the actuator body portion 100 in the axial direction D_{AX} of the actuator body portion 100. The sealing mechanism 200 includes a sealing member 210 into which the actuator body portion 100 is inserted, a caulking ring 230 provided on the outer peripheral surface of the actuator body portion 100 inserted into the sealing member 210 and restricting the actuator body portion 100, and a locking ring 220 that locks the sleeve to the sealing member 210. The sealing member 210 includes a body portion 212 into which the tube 110 is inserted, and the outer diameter of the body portion 212 is larger than the inner diameter of the tube 110 in the portion not inserted into the body portion 212.

## Description

### [Technical Field]

The present invention relates to a fluid pressure actuator that expands and contracts a tube using a gas or liquid, and more particularly to a so-called McKibben type fluid pressure actuator.

### [Background Art]

Conventionally, a structure (so-called McKibben type) having a rubber tube (tubular body) that expands and contracts by air pressure and a sleeve (mesh reinforcing structure) that covers the outer peripheral surface of the tube is widely used as a fluid pressure actuator that expands and contracts the tube as described above.

Both ends of the actuator body portion constituted by the tube and the sleeve are sealed using a sealing member formed of metal.

The sleeve is a cylindrical structure in which a high-tension fiber such as a polyamide fiber or a metal cord is woven, and the expansion motion of the tube is restricted to a predetermined range.

In order to prevent the sleeve from pulled out of the sealing member due to the load during the operation of the McKibben type fluid pressure actuator, there is a known structure in which the sleeve is locked to the flange portion formed on the sealing member using a locking member (locking ring), and both ends of the actuator body portion are caulked using a restricting member (caulking ring) (For example, Patent Literature 1).

### [Citation List]

### [Patent Literature]

[Patent Literature 1]
Japanese Patent Laid-Open No. 2018-035930

### [Summary of Invention]

A McKibben type fluid pressure actuator as described above may be used in an environment where expansion and contraction are repeated very many times (For example, about 10,000 ~ 100,000 times) in succession.

In such a case, since both ends of the tube in the axial direction near the restricting member expand relatively large in the radial direction, the mesh of the sleeve in the vicinity of the restricting member widens and becomes large.

In such a case, in the portion where the mesh of the sleeve widens, both ends of the tube in the axial direction near the restricting member expand more easily, and if the expansion and contraction operations are repeated many times, the end of the tube becomes bulged like a gourd and its durability decreases.

Accordingly, the following disclosure is made in view of such a situation, and it is an object of the present invention to provide a fluid pressure actuator which can prevent the mesh of the sleeve near the restricting member from expanding and further improve its durability.

An aspect of the present disclosure is a fluid pressure actuator including an actuator body portion comprising a tube having a cylindrical shape and that expands and contracts under pressure of a fluid, and a sleeve that is a structure in which cords oriented in a predetermined direction are woven and covers an outer peripheral surface of the tube. A sealing mechanism that seals an end of the actuator body portion in an axial direction of the actuator body portion. The sealing mechanism includes a sealing member into which the actuator body portion is inserted, a restricting member provided on an outer peripheral surface of the actuator body portion inserted into the sealing member and that restricts the actuator body portion, and a locking member that locks the sleeve to the sealing member. The sealing member includes a body portion into which the tube is inserted, and the outer diameter of the body portion is larger than the inner diameter of the tube in a portion not inserted into the body portion.

### [Brief Description of Drawings]

[FIG. 1] FIG. 1 is a side view of a fluid pressure actuator 10.
[FIG. 2] FIG. 2 is a partially exploded perspective view of the fluid pressure actuator 10.
[FIG. 3] FIG. 3 is a partially sectional view along the axial direction D_{AX} of a sealing mechanism 200.
[FIG. 4] FIG. 4 is a partially sectional view along the axial direction D_{AX} of the sealing mechanism 200 before assembly.
[FIG. 5] FIGS. 5 (a) through 5 (d) are partially sectional and contour views of the sealing mechanism 200 and the sealing mechanism 200P along the axial direction D_{AX}.

### [Description of Embodiments]

The following embodiments will be described based on the drawings. The same functions and structures will be denoted by the same or similar reference numerals, and their descriptions will be omitted accordingly.

### (1) Overall schematic configuration of fluid pressure actuator

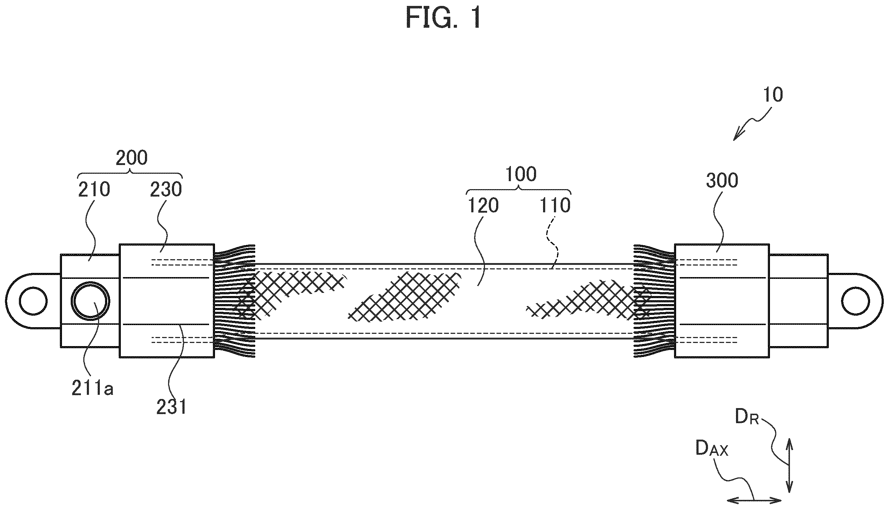

FIG. 1 is a side view of the fluid pressure actuator 10 according to the present embodiment. As shown in FIG. 1, the fluid pressure actuator 10 includes an actuator body portion 100, a sealing mechanism 200, and a sealing mechanism 300.

The sealing mechanism 200 and the sealing mechanism 300 seal both ends of the actuator body portion 100 in the axial direction D_{AX}. Specifically, the sealing mechanism 200 includes a sealing member 210 and a caulking ring 230. The sealing member 210 seals the end of the axial direction D_{AX} of the actuator body portion 100. The caulking ring 230 caulks the actuator body portion 100 together with the sealing member 210. On the outer peripheral surface of the caulking ring 230, an indentation 231 is formed, which is a mark where the caulking ring 230 is caulked by a jig.

The difference between the sealing mechanism 200 and the sealing mechanism 300 is whether or not a connection port 211a for the fluid is provided.

The actuator body portion 100 is constituted by a tube 110 and a sleeve 120. Fluid flows into the actuator body portion 100 through the connection port 211a.

The actuator body portion 100 contracts in the axial direction D_{AX} of the actuator body portion 100 and expands in the radial direction D_{R} due to fluid flow into the tube 110. The actuator body portion 100 expands in the axial direction D_{AX} of the actuator body portion 100 and contracts in the radial direction D_{R} due to the outflow of fluid from the tube 110. Due to the shape change of the actuator body portion 100, the fluid pressure actuator 10 functions as an actuator.

The fluid used for driving the fluid pressure actuator 10 may be either a gas such as air or a liquid such as water or mineral oil, but in particular, the fluid pressure actuator 10 has high durability that can withstand hydraulic driving under high pressure applied to the actuator body portion 100.

In addition, the fluid pressure actuator 10 is a so-called McKibben type, and can be used not only for artificial muscles, but also suitably for a robot limb (such as an upper limb or a lower limb) for which higher performance (contraction force) is required.

In addition, the fluid pressure actuator 10 can also be used as a body-worn power assist device, a gait assist device, and a training device such as muscle strength.

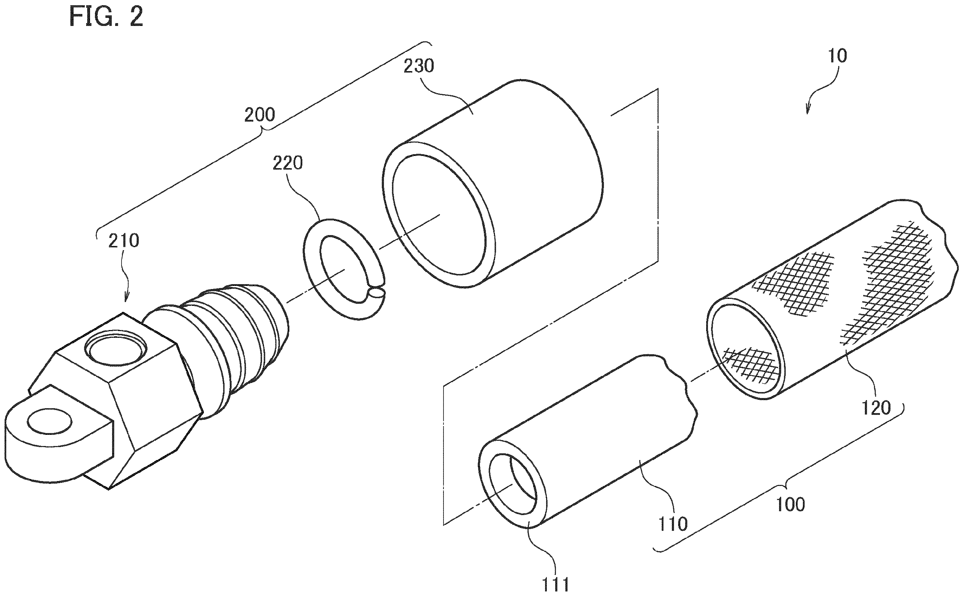

FIG. 2 is a partially enlarged perspective view of the fluid pressure actuator 10. As shown in FIG. 2, the fluid pressure actuator 10 includes an actuator body portion 100 and a sealing mechanism 200.

As described above, the actuator body portion 100 comprises a tube 110 and a sleeve 120.

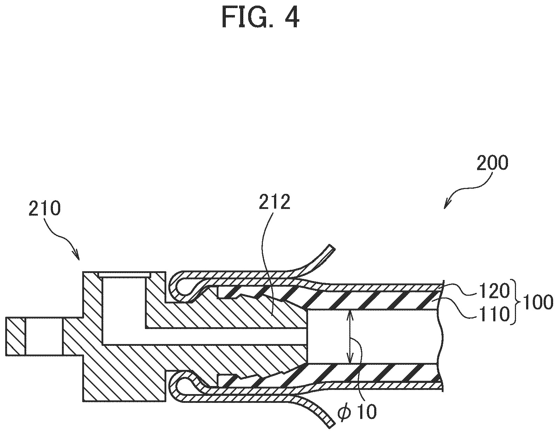

The tube 110 is a cylindrical cylindrical body that expands and contracts under fluid pressure. The tube 110 is made of an elastic material such as butyl rubber to repeatedly contract and expand under fluid pressure. The inner diameter Φ 10 (see FIG. 4) of the tube 110 is not particularly limited, but in this embodiment, it is about 9 mm.

When the fluid pressure actuator 10 is hydraulically driven, the material of the tube 110 may be NBR (nitrile rubber) having high oil resistance or at least one kind selected from the group consisting of NBR, hydrogenated NBR, chloroprene rubber, and epichlorohydrin rubber.

The sleeve 120 is cylindrical and covers the outer peripheral surface of the tube 110. The sleeve 120 is a structure in which cords oriented in a predetermined direction are woven, and a rhombic shape is repeated by crossing the oriented cords. By having such a shape, the sleeve 120 deforms pantographically and follows the tube 110 while restricting its contraction and expansion.

As the cord constituting the sleeve 120, a fiber cord of an aromatic polyamide (aramid fiber) or polyethylene terephthalate (PET) is preferably used. However, it is not limited to this kind of fiber cord, and for example, a metal cord composed of a high-strength fiber such as a PBO fiber (polyparaphenylene benzobisoxazole) or an extra-fine filament may be used.

The sealing mechanism 200 seals the end of the actuator body portion 100 in the axial direction D_{AX}. The sealing mechanism 200 is constituted by a sealing member 210, a locking ring 220 and a caulking ring 230.

The actuator body portion 100 is inserted into the sealing member 210. Metal such as stainless steel may be suitably used as the sealing member 210, but it is not limited to such metal, and a hard plastic material may be used.

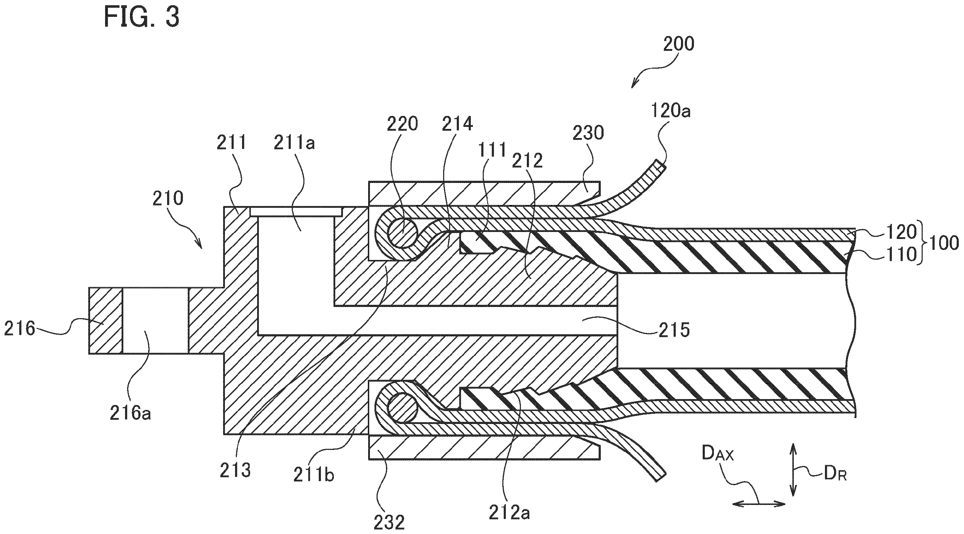

The locking ring 220 locks the sleeve 120 to the sealing member 210. In this embodiment, the locking ring 220 constitutes a locking member. Specifically, the sleeve 120 is folded back to the radial direction D_{R} outside via the locking ring 220 (Not shown in FIG. 2, see FIG. 3).

The locking ring 220 has a notched portion 221 partially notched so as to engage the sealing member 210. As the locking ring 220, a metal or a hard plastic material similar to the sealing member 210 can be used.

The caulking ring 230 is provided on the outer peripheral surface of the actuator body portion 100 inserted into the sealing member 210 to restrict the actuator body portion 100. In this embodiment, the locking ring 230 constitutes a restricting member.

The caulking ring 230 caulks the actuator body portion 100 together with the sealing member 210. Metals such as aluminum alloy, brass and iron can be used as the caulking ring 230. When the caulking ring 230 is caulked by the caulking jig, the indentation 231 (see FIG. 1) is formed.

The caulking jig is not particularly limited, but by caulking a plurality of dies (For example, a die divided into seven parts on the circumference) in contact with the outer circumferential surface of the caulking ring 230 in the radial inside, the actuator body portion 100 is restricted to form the linear indentation 231 along the axial direction D_{AX}.

### (2) Configuration of the sealing mechanism

Next, a specific configuration of the sealing mechanism 200 will be described with reference to FIG. 3. FIG. 3 is a partial cross-sectional view of the sealing mechanism 200 along the axial direction D_{AX}.

As shown in FIG. 3, the sealing member 210 includes a head portion 211, a body portion 212, and a neck portion 213.

The head portion 211 is provided in outside more than the body portion 212 in the axial direction D_{AX}. A connection port 211a is formed in the head portion 211.

The connection port 211a is connected to a hose (pipeline) connected to a driving pressure source of the fluid pressure actuator 10, specifically, a gas or liquid compressor.

The body portion 212 is a portion into which the tube 110 (see FIGS. 1 and 2) is inserted. Specifically, the body portion 212 is in contact with the inner peripheral surface of the tube 110 inserted into the sealing member 210.

At least a part of the body portion 212, specifically, the inside end portion of the axial direction D_{AX} of the body portion 212, is tapered such that the outer diameter decreases toward a center in the axial direction D_{AX}. Specifically, the inside end portion of the axial direction D_{AX} of the body portion 212 is tapered in such a way that the outer diameter decreases toward inside from the axial direction D_{AX} outside.

A stepped part 212a is formed on the outer peripheral surface of the body portion 212 to make it difficult for the tube 110 to be removed from the sealing member 210. The stepped part 212a is protruded toward the radial direction D_{R} outside so as to be resistant to the pulling direction of the tube 110 from the body portion 212.

The neck portion 213 is provided between a flange portion 214 and the head portion 211. The diameter Φ of the neck portion 213 is smaller than the diameter of the other portion of the sealing member 210. In this embodiment, the diameter of the neck portion 213 is about 13 mm. The size of the neck portion 213 in the radial direction D_{R} is smaller than that of the body portion 212 and the head portion 211.

The flange portion 214 is provided between the body portion 212 and the head portion 211, specifically adjacent to the body portion 212 and the neck portion 213. The flange portion 214 is more convex in the radial direction D_{R} outside than the body portion 212. More specifically, the flange portion 214 is an annular shape projecting from the outer peripheral surface of the neck portion 213 to the radial direction D_{R} outside.

In this embodiment, the diameter of the flange portion 214 is about 16 mm. As described above, since the diameter of the neck portion 213 is 13 mm, the level difference between the flange portion 214 and the neck portion 213 is about 1.5 mm.

The flange portion 214 abuts against an end surface 111 (Not shown in FIG. 3, see FIG. 2) of the tube 110 in the axial direction D_{AX}.

A through hole 215 is formed inside the sealing member 210 along the axial direction D_{AX}. The through hole 215 communicates with the connection port 211a, and fluid flows into the actuator body portion 100 through the through hole 215. In this embodiment, the diameter Φ of the through hole 215 is about 5 mm.

The sealing member 210 is provided with a connecting portion 216. Specifically, the connecting portion 216 is provided in the axial direction D_{AX} outside of the head portion 211. An engagement hole 216a is formed in the connecting portion 216 for engaging a member constituting a device using the fluid pressure actuator 10.

The tube 110 is inserted into the body portion 212. As described above, the flange portion 214 abuts against the end surface 111 of the tube 110. The diameter of the tube 110 is enlarged by being inserted into the body portion 212.

The stepped part 212a is further prevented from cutting into the inner peripheral surface of the tube 110 and dislodging the tube 110 from the body portion 212 by clamping the actuator body portion 100 together with the sealing member 210 by the caulking ring 230.

The locking ring 220 is provided on the outer peripheral surface of the sleeve 120 and the sleeve 120 is folded back to center side of the axial direction D_{AX} through the locking ring 220. Specifically, the sleeve 120 has a folded back part 120a folded back through the locking ring 220. The folded back part 120a is folded back to the radial direction D_{R} outside through the locking ring 220 and abuts against the inner circumferential surface of the caulking ring 230.

The caulking ring 230 locks the sleeve 120 folded back via the tube 110 and the locking ring 220 together with the sealing member 210 to secure the actuator body portion 100 to the sealing member 210.

An end surface 232 of the axial direction D_{AX} outside of the caulking ring 230 may be located near the boundary between the head portion 211 and the neck portion 213. Specifically, the end surface 232 may be located in contact with an inside surface 211b of the head portion 211 in the axial direction D_{AX}.

### (3) Diameter size of the sealing member 210 and the actuator body portion 100

FIG. 4 is a partial cross-sectional view of the sealing mechanism 200 before assembly along the axial direction D_{AX}. In FIG. 4, only the actuator body portion 100 and the sealing member 210 are shown, and illustrations such as the locking ring 220, the caulking ring 230, and the folded back part 120a of the sleeve 120 are omitted for convenience of explanation.

As described above, the tube 110 is enlarged in diameter by being inserted into the body portion 212. Therefore, the inner diameter Φ10 of the tube 110 before being enlarged, in other words, the inner diameter Φ10 of the tube 110 in the portion not inserted into the body portion 212, is smaller than the diameter (outer diameter) of the body portion 212.

That is, the outer diameter of the body portion 212 may be larger than the inner diameter Φ10 of the tube 110 in the portion not inserted into the body portion 212.

In the present embodiment, as shown in FIG. 4, the outer diameter (In this embodiment, about 14 mm) of inside end of the body portion 212 in the axial direction D_{AX} is larger than the inner diameter Φ10 of the tube 110. The outer diameter of inside end of the body portion 212 is preferably 30-70% larger than the inner diameter Φ10, and more preferably 40-50% larger.

If the outer diameter of inside end of the body portion 212 is too larger than the inner diameter Φ10, the tube 110 is easily dislodged before the actuator body portion 100 is caulked during the assembly of the fluid pressure actuator 10, and productivity decreases. In addition, the rubber (tube 110) in the caulked portion becomes too thin, and it is easy to cause a failure core. On the other hand, if the outer diameter of inside end of the body portion 212 is too thin than the inner diameter Φ10, a sufficient effect to prevent the mesh of the sleeve near the caulking ring 230 from widening cannot be obtained.

The diameter of the tube 110 is enlarged by being inserted into the body portion 212 having such a diameter difference, but the diameter enlargement ratio of the tube 110 is preferably 1.3 times or more and 1.7 times or less in consideration of the pullout prevention and durability of the tube 110. The diameter expansion ratio of the tube 110 may be the ratio of the diameter of the groove bottom of the stepped part 212a in the maximum outer diameter portion of the body portion 212 to the inner diameter Φ10 of the tube 110.

When the diameter of the body portion 212 is increased, the diameter of the groove bottom of the stepped part 212a also increases, thereby increasing the outer diameter of the portion to be caulked by the caulking ring 230 and increasing the strength of the portion to be caulked. As a result, the diameter Φ of the through hole 215 can also be increased, thereby reducing the fluid flow resistance and contributing to the improvement of the response when the fluid pressure actuator 10 is actuated.

### (4) Function and Effects

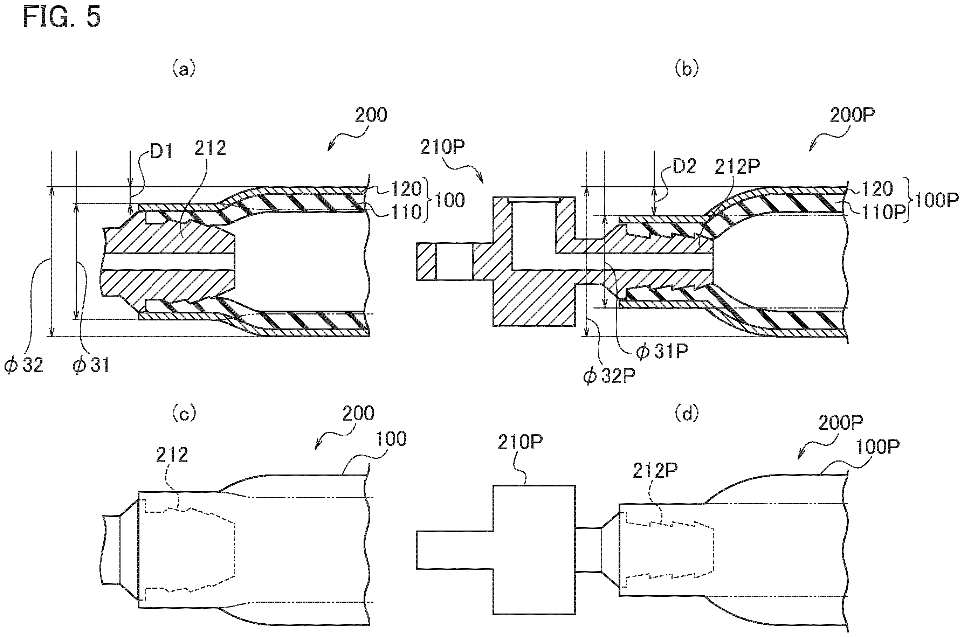

FIGS. 5 (a) to 5 (d) are partially sectional and contour views of the sealing mechanism 200 and the sealing mechanism 200P along the axial direction D_{AX}. In FIGS. 5 (a) to 5 (d), as in FIG. 4, illustrations of the locking ring 220, the caulking ring 230, and the like are omitted.

Specifically, FIG. 5 (a) schematically shows the shape of the sealing mechanism 200 when the actuator body portion 100 is expanded. FIG. 5 (b) schematically shows the shape of the sealing mechanism 200P according to the conventional example when the actuator body portion 100P is expanded. FIGS. 5 (c) and 5 (d) show contour diagrams of the sealing mechanism 200 and the sealing mechanism 200P, respectively.

When the outer diameter of the body portion 212P of the sealing member 210P is the same or smaller than the inner diameter of the tube 110P, as in the case of the sealing mechanism 200P, when the actuator body portion 100 is expanded in the circumferential direction by pressurizing the actuator body portion 100, the outer diameter of the portion of the actuator body portion 100P that is not caulked by the caulking ring 230 becomes larger compared with the actuator body portion 100P caulked by the caulking ring 230 (see, for example, FIG. 3). When such expansion and contraction operations are repeated, the mesh of the sleeve 120 shifts.

Therefore, when such operations are repeated for a long time, the cords constituting the sleeve 120 move toward the side of the caulking ring 230 that does not expand, and the cord spacing becomes narrow and dense.

On the other hand, at the center side of the axial direction D_{AX} slightly distant from the caulking ring 230, the cord spacing widens and becomes sparse.

In the part where the cord spacing becomes sparse, when pressurized, the tube 110P expands more than other parts, and finally deforms into a distorted shape like a gourd. Since unevenly large load is applied to the cord and the tube 110P constituting the sleeve 120, durability decreases.

The sealing mechanism 200 according to this embodiment can prevent such deformation of the actuator body portion. Specifically, as shown in FIGS. 5 (a) to 5 (d), when the actuator body portion 100 is expanded, the diameter difference D 1 between the diameter Φ31 of the actuator body portion 100 inserted into the body portion 212 and the diameter Φ32 of the actuator body portion 100 not inserted into the body portion 212 is smaller than the diameter difference D2 between the diameter Φ31P of the actuator body portion 100P inserted into the body portion 212P and the diameter Φ 32P of the actuator body portion 100P not inserted into the body portion 212 when the actuator body portion 100P is expanded.

Specifically, in the sealing mechanism 200, as described above, the outer diameter (about 14 mm) of the axial direction D_{AX} inside end of the body portion 212 is made larger than the inner diameter Φ10 (see FIG. 4) of the tube 110, and by inserting the tube 110 into the body portion 212 of the sealing member 210 while extending the tube in the radial direction D_{R}, the diameter size of the tube 110 in the portion caulked by the caulking ring 230 when the actuator body portion 100 is not pressurized can be made larger in advance than the diameter size of the tube 110 of the actuator body portion 100 not caulked by the caulking ring 230.

Therefore, even if the actuator body portion 100 expands by pressurizing the actuator body portion 100, the diameter difference D1 can be reduced (In other words, it is possible to assume that the diameter difference D1< the diameter difference D2.).

Thus, the deviation of the cord (thread) constituting the sleeve 120 can be reduced, and finally the gourding of the shape of the actuator body portion 100 can be suppressed.

That is, with the fluid pressure actuator 10, the mesh of the sleeve 120 in the vicinity of the caulking ring 230 can be prevented from widening, and the durability can be further improved.

In this embodiment, the tube 110 is widened by being inserted into the body portion 212 of the sealing member 210. Therefore, the contraction force of the tube 110 makes the tube more firmly engaged with the stepped part 212a of the body portion 212, thereby preventing the tube 110 from being pulled out more securely.

In this embodiment, the diameter expansion ratio of the tube 110 is preferably 1.3 times or more and 1.7 times or less. By adopting such a range, the pullout prevention and durability of the tube 110 can be achieved while suppressing the shape of the actuator body portion 100 from becoming gourd.

In the present embodiment, the axial direction D_{AX} inside end portion of the body portion 212 has a tapered shape whose outer diameter decreases toward the center of the axial direction D_{AX}. Therefore, it is easy to insert the tube 110 into the body portion 212 while enlarging the diameter.

### (5) Other Embodiments

Although the embodiments have been described above, they are not limited to the description of the embodiments, and it is obvious to those skilled in the art that various modifications and improvements can be made.

For example, the body portion 212 of the sealing member 210 may not necessarily have a tapered shape whose outer diameter decreases toward the center of the axial direction D_{AX}. That is, the outer diameter of the body portion 212 may be constant as long as it is larger than the inner diameter Φ10 of the tube 110, and portions of the axial direction D_{AX} outside may be equal to or smaller than the inner diameter Φ10.

Further, the connecting portion 216 of the sealing member 210 may not be provided. That is, the connecting portion 216 may or may not be provided depending on the application of the fluid pressure actuator 10. Further, a screw portion may be formed in the connecting portion 216 and may be detachable from the head portion 211.

In the above-described embodiment, the sleeve 120 is folded back via the locking ring 220, but the sleeve 120 may not necessarily be folded back toward the center of the axial direction D_{AX}.

Although the present disclosure has been described in detail, it is clear to those skilled in the art that the present disclosure is not limited to the embodiments described herein. The present disclosure may be implemented in a modified and modified manner without departing from the object and scope of the present disclosure as determined by the description of the scope of claims. Accordingly, the description of the present disclosure is for illustrative purposes and does not have any restrictive meaning to the present disclosure.

### [Reference Signs List]

10 Fluid pressure actuator
100, 100P Actuator body portion
110, 110P Tube
111 End surface
120 Sleeve
120a Folded back part
200, 200P Sealing mechanism
210 Sealing member
211 Head portion
211a Connection port
211b Inside surface
212, 212P Body portion
212a Stepped part
213 Neck portion
214 Flange portion
215 Through hole
216 Connecting portion
216a Engagement hole
220 Locking ring
221 Notched portion
230 Caulking ring
231 Indentation
232 End surface
300 Sealing mechanism

## Claims

1. A fluid pressure actuator comprising:
an actuator body portion comprising a tube having a cylindrical shape and that expands and contracts under pressure of a fluid, and a sleeve that is a structure in which cords oriented in a predetermined direction are woven and covers an outer peripheral surface of the tube; and
a sealing mechanism that seals an end of the actuator body portion in an axial direction of the actuator body portion, wherein
the sealing mechanism comprises;
a sealing member into which the actuator body portion is inserted;
a restricting member provided on an outer peripheral surface of the actuator body portion inserted into the sealing member and that restricts the actuator body portion; and
a locking member that locks the sleeve to the sealing member, wherein
the sealing member includes a body portion into which the tube is inserted, and
the outer diameter of the body portion is larger than the inner diameter of the tube in a portion not inserted into the body portion.

2. The fluid pressure actuator according to claim 1, wherein the tube is enlarged in diameter by being inserted into the body portion.

3. The fluid pressure actuator according to claim 2, wherein a diameter enlargement ratio of the tube is 1.3 times or more and 1.7 times or less.

4. The fluid pressure actuator according to any one of claims 1 to 3, wherein at least a part of the body portion is tapered such that the outer diameter decreases toward a center in the axial direction.
